# EUROPEAN PATENT APPLICATION

(11) **EP 4 650 578 A1**
(43) Date of publication of application: **19.11.2025**
(21) Application number: 24175578.4
(22) Date of filing: 14.05.2024
(51) Int. Cl.: F01N 3/10, F01N 3/20, F01N 11/00

(54) **A SYSTEM AND A METHOD FOR DETERMINING A CONDITION OF AN AMMONIA SLIP CATALYST**

(71) Applicant: VOLVO TRUCK CORPORATION, 405 08 Göteborg (SE)
(72) Inventor: MORENO CRUZ, Jacob Raul, 524 30 Herrljunga (SE)
(74) Representative: Valea AB

(57) **Abstract**

The present disclosure relates to a computer system (400) for determining a condition of an ammonia slip catalyst (101) of a vehicle (1), the computer system (400) comprising processing circuitry (402) configured to:
- obtain upstream oxygen concentration information indicative of an oxygen concentration of exhaust gases upstream of said ammonia slip catalyst (101) and downstream oxygen concentration information indicative of an oxygen concentration of exhaust gases downstream of said ammonia slip catalyst (101); and
[001] determine whether or not the ammonia slip catalyst (101) is in an N₂O production condition based on said upstream oxygen concentration information and said downstream oxygen concentration information.

## Description

### TECHNICAL FIELD

The disclosure relates generally to an emission control system. In particular aspects, the disclosure relates to each one of a computer system, a vehicle, a method, a computer program product and a non-transitory computer-readable storage medium for determining a condition of an ammonia slip catalyst. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Exhaust aftertreatment systems (EATS) are commonly used for treatment of exhausts generated by internal combustion engines in order to meet emission legislation, both for passenger cars and heavy-duty vehicles, such as trucks or buses. Generally, exhaust treatment systems for diesel engines comprise several components, such as a diesel oxidation catalyst (DOC), a selective catalytic reduction (SCR) component, a diesel particulate filter (DPF), and an ammonia slip catalyst (ASC). Together, these components significantly reduce the emissions of NOₓ and particulate matter from the combustion engine. The SCR component brings a reductant, such as an urea or ammonia (NH₃) solution, into reaction with NOₓ of the exhaust gases, leading to chemical reactions that convert NOₓ and ammonia to harmless nitrogen (N₂) and water (H₂O).

In certain operating conditions, the SCR component may, however, not be able to convert all ammonia from the injected reductant. Consequently, ammonia slip may occur from the SCR component. In order to avoid ammonia slip to the environment, an ammonia slip catalyst may be arranged downstream of the SCR component for further selective oxidation of ammonia into harmless nitrogen and water, hence avoiding smell and health risks. However, a problem associated with ammonia slip catalysts may be that it can generate laughing gas (N₂O). Laughing gas emissions may be difficult to measure. Thus, laughing gas emissions may occur undetected and are therefore hard to mitigate.

Another problem associated with ammonia slip catalyst is that in some operating conditions, the amount of ammonia emitted from the SCR component may be too high for the ASC to handle, such that ammonia may be emitted from the ammonia slip catalyst.

Consequently, there is a need for systems and methods for improved detection of laughing gas emissions and/or ammonia slip. Further, there is a need for systems and methods for improved mitigation of laughing gas emissions and/or ammonia slip.

### SUMMARY

According to a first aspect of the disclosure, there is provided a computer system for determining a condition of an ammonia slip catalyst, ASC, of a vehicle, the computer system comprising processing circuitry configured to:
obtain upstream oxygen concentration information indicative of an oxygen concentration of exhaust gases upstream of said ammonia slip catalyst and downstream oxygen concentration information indicative of an oxygen concentration of exhaust gases downstream of said ammonia slip catalyst; and
determine whether or not the ammonia slip catalyst is in an N₂O production condition based on said upstream oxygen concentration information and said downstream oxygen concentration information. An N₂O production condition herein refers to a condition where the N₂O production in the ASC is significantly increased as compared to a reference condition of normal engine operating conditions. The first aspect of the disclosure may seek to provide an improved detection of N₂O production in the ASC by considering an oxygen consumption in the ASC which is evaluated using the upstream and downstream oxygen concentration information. This is possible because the production of N₂O consumes significant amounts of oxygen. A technical benefit may include providing a basis for informed decisions to mitigate N₂O emissions by an engine control system, leading to a decrease of overall N₂O emissions from the vehicle.

Optionally in some examples, including in at least one preferred example, the processing circuitry is further configured to:
obtain temperature information indicative of a temperature of the ammonia slip catalyst; and
determine whether or not the ammonia slip catalyst is in said N₂O production condition also using said temperature information. A technical benefit may include improved detection of N₂O emissions, since N₂O production is highly temperature dependent. The embodiment may take advantage of the known fact that N₂O production mainly occurs at exhaust temperatures around 250°C.

Optionally in some examples, including in at least one preferred example, the processing circuitry may further be configured to:
obtain downstream NOₓ concentration information indicative of a NOₓ concentration downstream of said ammonia slip catalyst; and
in response to determining that said temperature information is associated with a temperature of the ammonia slip catalyst being within a predetermined temperature range and in response to determining that said downstream NOₓ concentration information indicates a variation of said NOₓ concentration downstream of said ammonia slip catalyst being within a predetermined variation range for a predetermined time, determine that the ammonia slip catalyst is in said N₂O production condition. A technical benefit may include further improved detection of said N₂O production condition. The predetermined temperature range herein refers to temperature range associated with increased production of N₂O. When considering the NOₓ concentration downstream of the ASC, it should be noted that common NOₓ sensors have a cross-sensitivity for NH₃. In other words, by only considering the reading of a NOₓ sensor, it cannot be concluded if NOₓ or NH₃ is present. However, by looking at the temporal behavior of the NOₓ reading, i.e., by determining that the downstream NOₓ concentration is within a predetermined variation range for a predetermined time, indications can be obtained that the current NOₓ reading is not caused by NH₃. Consequently, when it is determined that the downstream NOₓ concentration is within a predetermined variation range for a predetermined time, an indication may be obtained that the current consumption of oxygen is not due to NH₃ oxidation, but in fact due to N₂O production.

Optionally in some examples, including in at least one preferred example, the processing circuitry is further configured to:
in response to determining that said temperature information is associated with a temperature of the ammonia slip catalyst being outside said predetermined temperature range and in response to determining that said downstream NOₓ concentration information indicates a downstream NOₓ concentration being above a downstream NOₓ concentration threshold, determine that the ammonia slip catalyst is in an ammonia slip condition.

When the temperature of the ASC is outside the predetermined temperature range associated with increased N₂O production, and the NOₓ concentration is above a threshold, it may be concluded that the current indication of NOₓ present in the exhaust gases is in fact not due to NOₓ but rather due to NH₃. Thus, it can be concluded that ammonia slip is present in the ASC. A technical benefit may include improved detection of ammonia slip out of the ASC.

Optionally in some examples, including in at least one preferred example, the processing circuitry is further configured to:
when it is determined that the ammonia slip catalyst is in the N₂O production condition, estimate the quantity of N₂O produced by said ammonia slip catalyst using an assumption that an amount, preferably the total amount, of oxygen consumed by said ammonia slip catalyst, which can be determined on the basis of said upstream oxygen concentration information and said downstream oxygen concentration information, contributes to the formation of N₂O. A technical benefit may include a quantification of the detected N₂O emissions, which can be used for an assessment of the seriousness of the N₂O production condition and for mitigation of the N₂O emissions.

Optionally in some examples, including in at least one preferred example, a selective catalytic reduction, SCR, component is arranged upstream of the ammonia slip catalyst and a reductant, such as a urea solution or an ammonia solution, is injected by a reductant injector arranged within or upstream of the selective catalytic reduction component, and the processing circuitry is further configured to:
adjust, optionally reduce, the amount of injected reductant in response to detecting that the ammonia slip catalyst is in the N₂O production condition. Optionally in some examples, including in at least one preferred example, the processing circuitry is further configured to:
adjust, optionally reduce, the amount of injected reductant in response to detecting that the ammonia slip catalyst is in the ammonia slip condition. A technical benefit may include decreased N₂O production or ammonia slip in operating conditions similar to the detected operating conditions which were associated with increased N₂O production and/or ammonia slip. Thus, a system is obtained that learns from previous emission conditions and that adapts the reductant injection with the aim of avoiding or mitigating these emission conditions.

Optionally in some examples, including in at least one preferred example, said predetermined temperature range is associated with a N₂O production above an N₂O production threshold. A technical benefit may include an improved detection of the N₂O production condition.

Optionally in some examples, including in at least one preferred example, said predetermined temperature range is between 200°C and 300°C, preferably between 225°C and 275°C. A technical benefit may include a simple and robust detection of the N₂O production condition.

According to a second aspect of the disclosure, there is provided a vehicle comprising an ammonia slip catalyst, the vehicle comprising the computer system of the first aspect. The second aspect of the disclosure may seek to provide an improved detection of N₂O production in the ammonia slip catalyst. A technical benefit may include providing a basis for informed decisions to mitigate N₂O emissions by an engine control system, leading to a decrease of overall N₂O emissions from the vehicle.

Optionally in some examples, including in at least one preferred example, the vehicle further comprises a selective catalytic reduction component and a reductant injector.

Optionally in some examples, including in at least one preferred example, the vehicle further comprises an upstream oxygen sensor arranged upstream of said ammonia slip catalyst, and a downstream oxygen sensor arranged downstream of said ammonia slip catalyst.

Optionally in some examples, including in at least one preferred example, the vehicle further comprises an NOₓ-sensor arranged downstream of the ammonia slip catalyst.

According to a third aspect of the disclosure, there is provided a computer-implemented method for determining a condition of an ammonia slip catalyst, ASC, of a vehicle, the method comprising:
obtaining, by processing circuitry of a computer system, upstream oxygen concentration information indicative of an oxygen concentration of exhaust gases upstream of said ammonia slip catalyst and downstream oxygen concentration information indicative of an oxygen concentration of exhaust gases downstream of said ammonia slip catalyst; and
determining, by the processing circuitry, whether or not the ammonia slip catalyst is in an N₂O production condition based on said upstream oxygen concentration information and said downstream oxygen concentration information.
Advantages and advantageous features of the method according to the third aspect are largely analogous to advantages and advantageous features of the computer system according to the first aspect.

Optionally in some examples, including in at least one preferred example, the method further comprises:
obtaining, by the processing circuitry, temperature information indicative of a temperature of the ammonia slip catalyst; and
determining, by the processing circuitry, whether or not the ammonia slip catalyst is in said N₂O production condition also using said temperature information.

Optionally in some examples, including in at least one preferred example, the method further comprises:
obtaining, by the processing circuitry, downstream NOₓ concentration information indicative of a NOₓ concentration downstream of said ammonia slip catalyst;
in response to determining, by the processing circuitry, that said temperature information is associated with a temperature of the ammonia slip catalyst being within a predetermined temperature range and in response to determining, by the processing circuitry, that said downstream NOₓ concentration information indicates a variation of said NOₓ concentration downstream of said ammonia slip catalyst being within a predetermined variation range for a predetermined time, determining, by the processing circuitry, that the ammonia slip catalyst is in said N₂O production condition.

Optionally in some examples, including in at least one preferred example, the method further comprises:
in response to determining, by the processing circuitry, that said temperature information is associated with a temperature of the ammonia slip catalyst being outside said predetermined temperature range and in response to determining, by the processing circuitry, that said downstream NOₓ concentration information indicates a downstream NOₓ concentration being above a downstream NOₓ concentration threshold, determining, by the processing circuitry, that the ammonia slip catalyst is in an ammonia slip condition.

Optionally in some examples, including in at least one preferred example, the method further comprises:
when it is determined, by the processing circuitry, that the ammonia slip catalyst is in the N₂O production condition, estimating, by the processing circuitry, the quantity of N₂O produced by said ammonia slip catalyst using an assumption that an amount, preferably the total amount, of oxygen consumed by said ammonia slip catalyst, which can be determined on the basis of said upstream oxygen concentration information and said downstream oxygen concentration information, contributes to the formation of N₂O.

Optionally in some examples, including in at least one preferred example, said predetermined temperature range is associated with a N₂O production above an N₂O production threshold.

Optionally in some examples, including in at least one preferred example, said predetermined temperature range is between 200°C and 300°C, preferably between 225°C and 275°C.

Optionally in some examples, including in at least one preferred example, a Selective Catalytic reduction, SCR, component is arranged upstream of the ammonia slip catalyst and a reductant is injected by a reductant injector arranged within or upstream of the selective catalytic reduction component, the method comprising:
adjusting, optionally reducing, the amount of injected reductant by the reductant injector in response to detecting that the ammonia slip catalyst is in the N2O production condition.

Optionally in some examples, including in at least one preferred example, the method further comprises:
adjusting, optionally reducing, the amount of injected reductant in response to detecting that the ammonia slip catalyst is in the ammonia slip condition.

According to a fourth aspect, there is provided a computer program product comprising program code for performing, when executed by the processing circuitry, the method of the third aspect.

According to a fifth aspect, there is provided a non-transitory computer-readable storage medium comprising instructions, which when executed by the processing circuitry, cause the processing circuitry to perform the method of the third aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a schematic side view of a vehicle according to an example.
**FIG. 2** schematically shows an exhaust aftertreatment system according to examples.
**FIG. 3** is a flow chart illustrating a method according to an example.
**FIG. 4** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

An aim of the present disclosure is to alleviate at least one drawback of the prior art, or at least to provide a suitable alternative. In particular, an aim of the present disclosure is to provide an improved detection of N₂O production and/or ammonia slip. In particular aspects, the disclosure aims for a mitigation of N₂O production and/or ammonia slip.

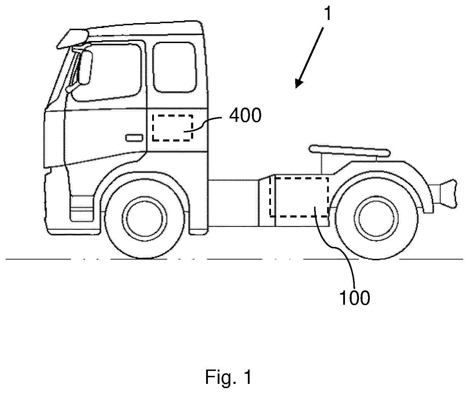

**FIG. 1** schematically depicts a vehicle 1 in the form of a heavy-duty towing truck. The vehicle 1 comprises an exhaust aftertreatment system (EATS) 100 with an internal combustion engine (not shown), wherein the combustion engine may be used for propulsion of the vehicle 1. A computer system 400 is provided for monitoring and/or controlling the EATS 100.

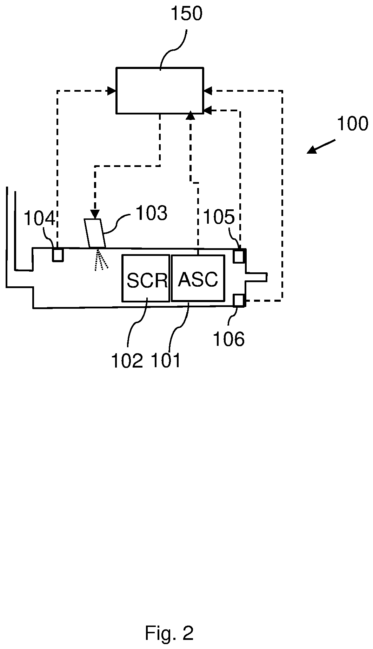

**FIG. 2** shows an EATS 100 according to the present disclosure. The EATS 100 comprises at least a selective catalytic reduction (SCR) component 102 and an ammonia slip catalyst (ASC) 101. Both the SCR component 102 and the ASC 101 are arranged in a fluid path for the exhaust gases received for an internal combustion engine (not shown). For monitoring and/or controlling the EATS 100, an electronic control unit 150 is provided. The electronic control unit 150 may form part of the computer system 400 as illustrated in **FIG. 1****.** The electronic control unit 150 may preferably be located within the vehicle 1, but could also be located remotely, e.g., on a cloud server, for remote engine and EATS diagnostics. The electronic control unit 150 may be configured to obtain upstream oxygen concentration information indicative of an oxygen concentration upstream of the ASC. By way of an example, the upstream oxygen concentration information may be indicated by an upstream oxygen concentration sensor 104 arranged in the exhaust flow path upstream of the ASC. The upstream oxygen concentration sensor 104 may be a lambda sensor. Further, the electronic control unit 150 may be configured to receive downstream oxygen concentration information indicative of an oxygen concentration downstream of the ASC. By way of an example, the downstream oxygen concentration information may be indicated by a downstream oxygen concentration sensor 105 arranged in the exhaust flow path upstream of the ASC. Also, the downstream oxygen concentration sensor 105 may be a lambda sensor. Still further, the electronic control unit 150 may be configured to obtain downstream NOₓ concentration information indicative of a NOₓ concentration downstream of the ASC by a NOₓ sensor 106. In one example, the electronic control unit may further be configured to control a reductant injector 103.

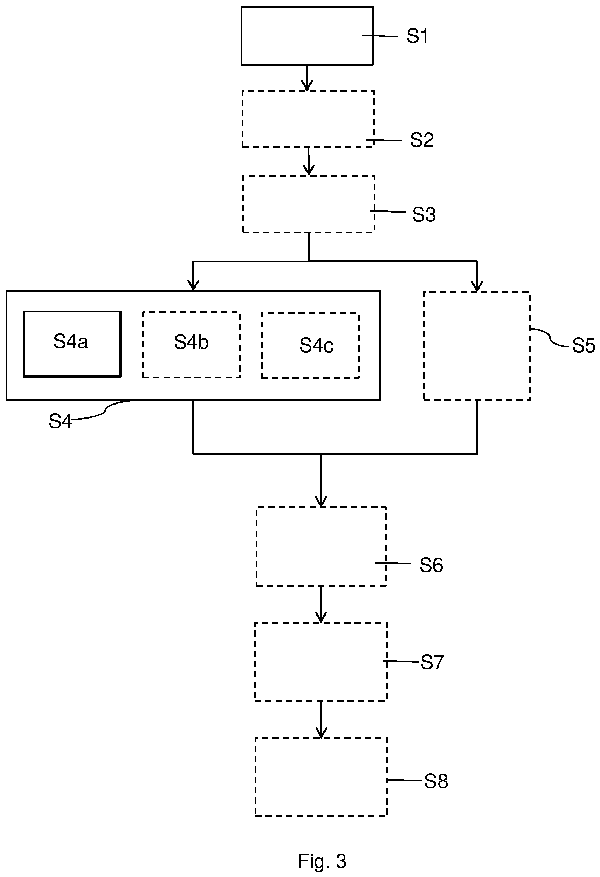

A computer-implemented method for determining a condition of an ammonia slip catalyst of a vehicle, such as the vehicle 1 illustrated in **FIG. 1** comprising the EATS 100 illustrated in **FIG. 2****,** is illustrated in **FIG. 3****.** The method may be carried out by processing circuity of a computer system 400, such as within the control unit 150 illustrated in **FIG. 2****.** The method comprises the actions illustrated in **FIG. 3****,** wherein optional actions are illustrated with dashed lines.

**Action S1:** Obtaining upstream oxygen concentration information indicative of an oxygen concentration of exhaust gases upstream of said ammonia slip catalyst 101 and downstream oxygen concentration information indicative of an oxygen concentration of exhaust gases downstream of said ammonia slip catalyst 101. As mentioned above, the electronic control unit 150 comprises processing circuitry configured to obtain upstream and downstream oxygen concentration information. By comparing the upstream and downstream oxygen concentration information, an oxygen consumption can be assessed. By way of an example, the upstream and downstream oxygen concentration information are obtained from an upstream oxygen sensor 104 and a downstream oxygen sensor 105. The signals from the oxygen sensors 104, 105 may be transient signals varying over time. To make the upstream and the downstream oxygen sensor signals comparable, one of the signals may be timeshifted to account for the time difference in the signals due to exhaust gases travelling from the upstream oxygen sensor to the downstream oxygen sensor.

**Action S4:** Determine whether or not the ammonia slip catalyst 101 is in a N₂O production condition based on said upstream oxygen concentration information and said downstream oxygen concentration information. When the oxygen consumption has been assessed by comparing the upstream oxygen concentration information to the downstream oxygen concentration information, the processing circuitry 402 may compare the oxygen consumption to an oxygen consumption threshold value. The oxygen consumption threshold value may correspond to normal operating conditions where no or only little N₂O is known to be produced. When the oxygen consumption is above the oxygen consumption threshold value, it may be concluded by the processing circuitry, that N₂O is produced in the ASC. In other words, the ASC is in the N₂O production condition.

Optionally, the method may further comprise the following optional actions:

**Action S2:** obtaining temperature information indicative of a temperature of the ammonia slip catalyst 101. Temperature information of the ASC may be obtained by a temperature sensor arranged in the or in connection to the ASC. Alternatively, the temperature of the ASC may be indicated by a temperature sensor positioned in the flow of exhaust gases. Still alternatively, the temperature of the ASC may be obtained by a heat transfer model of the EATS and/or other components of the vehicle.

**Action S4a:** determining whether or not the ammonia slip catalyst 101 is in said N₂O production condition also using said temperature information. The processing circuitry may optionally be configured to use the temperature information of the ASC to make a better assessment of the state of the ASC in terms of N₂O production. This is possible since the N₂O production is highly temperature dependent. As is known from experiments, the N₂O production is highest at a temperature of around 250°C, and very low at temperatures below 200°C and above 300°C.

**Action S3:** obtaining downstream NOₓ concentration information indicative of a NOₓ concentration downstream of said ammonia slip catalyst 101. In order to further increase the detection reliability, the processing circuitry 402 may be configured to obtain downstream NOₓ concentration information, e.g., by a NOₓ sensor 106 positioned in the flow of exhaust gases downstream of the ASC.

**Action S4:** in response to determining that said temperature information is associated with a temperature of the ammonia slip catalyst 101 being within a predetermined temperature range and in response to determining, by the processing circuitry (402), that said downstream NOₓ concentration information indicates a variation of said NOₓ concentration downstream of said ammonia slip catalyst 101 being within a predetermined variation range for a predetermined time, determining S4c that the ammonia slip catalyst 101 is in said N₂O production condition. The reliability of the detection of the N₂O production condition may further be increased by taking into account the downstream NOₓ concentration information. Further indication that the ASC is in the N₂O production condition may be obtained, when the NOₓ concentration information is approximately constant over time, i.e. when it is within a predetermined variation range for a predetermined time, since it can then be excluded that there is a significant amount of ammonia slip. Common NOₓ sensors have a cross-sensitivity for ammonia. An increased NOₓ value may therefore be caused by ammonia slip.

**Action S5:** in response to determining that the temperature information is associated with a temperature of the ammonia slip catalyst 101 being outside said predetermined temperature range and in response to determining that said downstream NOₓ concentration information indicates a downstream NOₓ concentration being above a downstream NOₓ concentration threshold, determining that the ammonia slip catalyst 101 is in an ammonia slip condition. The processing circuitry may be configured to determine that ammonia slip occurs, when the temperature of the ASC is outside the predetermined temperature range associated with increased N₂O production and the downstream NOₓ concentration is above a threshold, since it can then be excluded that the ASC is in the N₂O production condition. Further, the increased NOₓ concentration downstream of the ASC may indicate that ammonia is present downstream of the ASC due to the cross-sensitivity of the NOₓ sensor for ammonia. Thus, in these circumstances it may be concluded that ammonia slip out of the ASC occurs.

**Action S6:** when it is determined that the ammonia slip catalyst is in the N₂O production condition, estimating, the quantity of N₂O produced by said ammonia slip catalyst 101 using an assumption that an amount, preferably the total amount, of oxygen consumed by said ammonia slip catalyst 101, which can be determined on the basis of said upstream oxygen concentration information and said downstream oxygen concentration information, contributes to the formation of N₂O. The processing circuitry may further be configured to estimate the quantity of N₂O produced based on the determined oxygen consumption, i.e., by monitoring the difference between the upstream and the downstream oxygen concentration information. The underlying assumption is that a part (such as a percentage) of the oxygen consumption or all oxygen consumption is converted to N₂O.

Further, the method may comprise the following actions to mitigate N₂O production and ammonia slip in operation conditions, where N₂O production or ammonia slip is detected, by controlling a reductant injector 103.

Purely by way of example, the method may comprise (see **Action S8**) adjusting, optionally reducing, the amount of injected reductant by the reductant injector 103 in response to detecting that the ammonia slip catalyst 101 is in the N₂O production condition. Optionally, the method may further comprise:
Adjusting, optionally reducing, the amount of injected reductant in response to detecting that the ammonia slip catalyst is in the ammonia slip condition.

The step of adjusting, optionally reducing, the amount of injected reductant by the reductant injector 103 in response to detecting that the ammonia slip catalyst 101 is in the N₂O production condition and/or in the ammonia slip condition may be executed as soon as the N₂O production condition and/or in the ammonia slip condition is detected using e.g., any one of the above examples of the method. However, it is also envisaged that the method may detect the N₂O production condition or the ammonia slip condition using other method examples than the ones presented above. This will be elaborated on hereinbelow with reference to **Action S7** and **Action S8.**

**Action S7:** detecting operating conditions associated with N₂O production or ammonia slip. Using the detected N₂O production condition and/or the ammonia slip condition at particular instances during vehicle operations, particular operating conditions of the vehicle can be associated with increased N₂O production and/or ammonia slip. Thus, a map can be created by the processing circuitry 402, associating operating conditions of the vehicle with the N₂O production condition and/or the ammonia slip condition.

**Action S8:** adjusting the amount of injected reductant by the reductant injector 103 for the detected operating conditions. Once the operating conditions of the vehicle with increased N₂O production have been detected, the processing circuitry 402 may be configured to control the amount of injected reductant during these operating conditions with the aim of reducing emissions of N₂O or ammonia.

Action **S7** and **S8** may be executed during the use of the vehicle. The processing circuitry may include machine learning capabilities, such as a neural network, to learn and predict operating conditions with increased N₂O production and/or ammonia slip. The machine learning capabilities may include an optimization of the reductant injection with the aim of reducing NOₓ emissions while at the same time avoiding N₂O production and ammonia slip.

The method may be executed by processing circuitry 402 located inside the vehicle. Alternatively, the method may be executed remotely by processing circuitry 402 of a diagnostic system of a remote server.

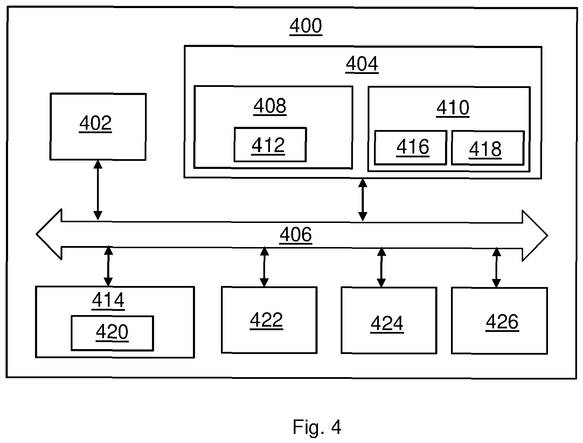

**FIG. 4** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units, such as the control unit 150 illustrated in FIG. 2), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., randomaccess memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

In the following, possible features and feature combinations of the present disclosure are presented as a list of numbered Examples.

Example 1: A computer system (400) for determining a condition of an ammonia slip catalyst, ASC, (101) of a vehicle (1), the computer system (400) comprising processing circuitry (402) configured to:
- obtain upstream oxygen concentration information indicative of an oxygen concentration of exhaust gases upstream of said ammonia slip catalyst (101) and downstream oxygen concentration information indicative of an oxygen concentration of exhaust gases downstream of said ammonia slip catalyst (101); and
- determine whether or not the ammonia slip catalyst (101) is in an N₂O production condition based on said upstream oxygen concentration information and said downstream oxygen concentration information.

Example 2: The computer system (400) of example 1, wherein the processing circuitry (402) is further configured to:
- obtain temperature information indicative of a temperature of the ammonia slip catalyst (101); and
- determine whether or not the ammonia slip catalyst (101) is in said N₂O production condition also using said temperature information.

Example 3: The computer system (400) of example 2, wherein the processing circuitry (402) is further configured to:
- obtain downstream NOₓ concentration information indicative of a NOₓ concentration downstream of said ammonia slip catalyst (101); and
- in response to determining that said temperature information is associated with a temperature of the ammonia slip catalyst (101) being within a predetermined temperature range and in response to determining that said downstream NOₓ concentration information indicates a variation of said NOₓ concentration downstream of said ammonia slip catalyst (101) being within a predetermined variation range for a predetermined time, determine that the ammonia slip catalyst (101) is in said N₂O production condition.

Example 4: The computer system (400) of examples 3, wherein the processing circuitry (402) is further configured to:
- in response to determining that said temperature information is associated with a temperature of the ammonia slip catalyst (101) being outside said predetermined temperature range and in response to determining that said downstream NOₓ concentration information indicates a downstream NOₓ concentration being above a downstream NOₓ concentration threshold, determine that the ammonia slip catalyst (101) is in an ammonia slip condition.

Example 5: The computer system (400) of any of the preceding examples, wherein the processing circuitry (402) is further configured to:
- when it is determined that the ammonia slip catalyst (101) is in the N₂O production condition, estimate the quantity of N₂O produced by said ammonia slip catalyst (101) using an assumption that an amount, preferably the total amount, of oxygen consumed by said ammonia slip catalyst (101), which can be determined on the basis of said upstream oxygen concentration information and said downstream oxygen concentration information, contributes to the formation of N₂O.

Example 6: The computer system (400) of any of the preceding examples, wherein a Selective Catalytic reduction, SCR, component (102) is arranged upstream of the ammonia slip catalyst (101) and a reductant is injected by a reductant injector (103) arranged within or upstream of the selective catalytic reduction component (102), and wherein the processing circuitry (402) is further configured to:
- detect operating conditions associated with N₂O production or ammonia slip; and
- adjust the amount of injected reductant for the detected operating conditions.

Example 7: The computer system (400) of any of examples 3-6, wherein said predetermined temperature range is associated with an N₂O production above an N₂O production threshold.

Example 8: The computer system (400) of any examples 3-7, wherein said predetermined temperature range is between 200°C and 300°C, preferably between 225°C and 275°C.

Example 9: A vehicle (1) comprising an ammonia slip catalyst (101), the vehicle (1) comprising the computer system (400) of any of examples 1-8.

Example 10: The vehicle (1) according to example 9 further comprising a selective catalytic reduction component (102) and a reductant injector (103).

Example 11: The vehicle (1) according to any of examples 9-10, further comprising an upstream oxygen sensor (104) arranged upstream of said ammonia slip catalyst (101), and
a downstream oxygen sensor (105) arranged downstream of said ammonia slip catalyst (101).

Example 12: The vehicle (1) according to any of examples 9-11, further comprising an NOₓ-sensor arranged downstream of the ammonia slip catalyst.

Example 13: A computer-implemented method for determining a condition of an ammonia slip catalyst, ASC, (101) of a vehicle (1), comprising:
obtaining (S1), by processing circuitry (402) of a computer system (400), upstream oxygen concentration information indicative of an oxygen concentration of exhaust gases upstream of said ammonia slip catalyst (101) and downstream oxygen concentration information indicative of an oxygen concentration of exhaust gases downstream of said ammonia slip catalyst (101); and
determining (S4), by the processing circuitry (402), whether or not the ammonia slip catalyst (101) is in an N₂O production condition based on said upstream oxygen concentration information and said downstream oxygen concentration information.

Example 14: The method of example 13, further comprising:
obtaining (S2), by the processing circuitry (402), temperature information indicative of a temperature of the ammonia slip catalyst (101); and
determining (S4a), by the processing circuitry (402), whether or not the ammonia slip catalyst (101) is in said N₂O production condition also using said temperature information.

Example 15: The method of example 14, further comprising:
obtaining (S3), by the processing circuitry (402), downstream NOₓ concentration information indicative of a NOₓ concentration downstream of said ammonia slip catalyst (101); and
in response to determining, by the processing circuitry (402), that said temperature information is associated with a temperature of the ammonia slip catalyst (101) being within a predetermined temperature range and in response to determining, by the processing circuitry (402), that said downstream NOₓ concentration information indicates a variation of said NOₓ concentration downstream of said ammonia slip catalyst (101) being within a predetermined variation range for a predetermined time, determining (S4c), by the processing circuitry (402), that the ammonia slip catalyst (101) is in said N₂O production condition.

Example 16: The method of example 15, further comprising:
in response to determining, by the processing circuitry (402), that said temperature information is associated with a temperature of the ammonia slip catalyst (101) being outside said predetermined temperature range and in response to determining, by the processing circuitry (402), that said downstream NOₓ concentration information indicates a downstream NOₓ concentration being above a downstream NOₓ concentration threshold, determining (S5), by the processing circuitry (402), that the ammonia slip catalyst (101) is in an ammonia slip condition.

Example 17: The method of any of examples 13-16, further comprising:
when it is determined, by the processing circuitry (402), that the ammonia slip catalyst (101) is in the N₂O production condition, estimating (S6), by the processing circuitry (402), the quantity of N₂O produced by said ammonia slip catalyst (101) using an assumption that an amount, preferably the total amount, of oxygen consumed by said ammonia slip catalyst (101), which can be determined on the basis of said upstream oxygen concentration information and said downstream oxygen concentration information, contributes to the formation of N₂O.

Example 18: The method of any of examples 15-17, wherein said predetermined temperature range is associated with an N₂O production above an N₂O production threshold.

Example 19: The method of any of examples 15-18, wherein said predetermined temperature range is between 200°C and 300°C, preferably between 225°C and 275°C.

Example 20: The method of any of examples 13-19, wherein a Selective Catalytic reduction, SCR, component (102) is arranged upstream of the ammonia slip catalyst (101) and a reductant is injected by a reductant injector (103) arranged within or upstream of the selective catalytic reduction component (102), the method comprising:
- detecting (S7) operating conditions associated with N₂O production or ammonia slip; and
- adjusting (S8) the amount of injected reductant by the reductant injector (103) for the detected operating conditions.

Example 21: A computer program product comprising program code for performing, when executed by the processing circuitry (402), the method of any of examples 13-20.

Example 22: A non-transitory computer-readable storage medium comprising instructions, which when executed by the processing circuitry (402), cause the processing circuitry (402) to perform the method of any of examples 13-19.

## Claims

1. A computer system (400) for determining a condition of an ammonia slip catalyst (101) of a vehicle (1), the computer system (400) comprising processing circuitry (402) configured to:
- obtain upstream oxygen concentration information indicative of an oxygen concentration of exhaust gases upstream of said ammonia slip catalyst (101) and downstream oxygen concentration information indicative of an oxygen concentration of exhaust gases downstream of said ammonia slip catalyst (101); and
- determine whether or not the ammonia slip catalyst (101) is in an N₂O production condition based on said upstream oxygen concentration information and said downstream oxygen concentration information.

2. The computer system (400) of claim 1, wherein the processing circuitry (402) is further configured to:
- obtain temperature information indicative of a temperature of the ammonia slip catalyst (101); and
- determine whether or not the ammonia slip catalyst (101) is in said N₂O production condition also using said temperature information.

3. The computer system (400) of claim 2, wherein the processing circuitry (402) is further configured to:
- obtain downstream NOₓ concentration information indicative of a NOₓ concentration downstream of said ammonia slip catalyst (101); and
- in response to determining that said temperature information is associated with a temperature of the ammonia slip catalyst (101) being within a predetermined temperature range and in response to determining that said downstream NOₓ concentration information indicates a variation of said NOₓ concentration downstream of said ammonia slip catalyst (101) being within a predetermined variation range for a predetermined time, determine that the ammonia slip catalyst (101) is in said N₂O production condition.

4. The computer system (400) of claims 3, wherein the processing circuitry (402) is further configured to:
- in response to determining that said temperature information is associated with a temperature of the ammonia slip catalyst (101) being outside said predetermined temperature range and in response to determining that said downstream NOₓ concentration information indicates a downstream NOₓ concentration being above a downstream NOₓ concentration threshold, determine that the ammonia slip catalyst (101) is in an ammonia slip condition.

5. The computer system (400) of any of the preceding claims, wherein the processing circuitry (402) is further configured to:
- when it is determined that the ammonia slip catalyst (101) is in the N₂O production condition, estimate the quantity of N₂O produced by said ammonia slip catalyst (101) using an assumption that an amount, preferably the total amount, of oxygen consumed by said ammonia slip catalyst (101), which can be determined on the basis of said upstream oxygen concentration information and said downstream oxygen concentration information, contributes to the formation of N₂O.

6. The computer system (400) of any of the preceding claims, wherein a selective catalytic reduction component (102) is arranged upstream of the ammonia slip catalyst (101) and a reductant is injected by a reductant injector (103) arranged within or upstream of the selective catalytic reduction component (102), and wherein the processing circuitry (402) is further configured to:
- adjust, optionally reduce, the amount of injected reductant in response to detecting that the ammonia slip catalyst (101) is in the N₂O production condition.

7. A vehicle (1) comprising an ammonia slip catalyst (101), the vehicle (1) comprising the computer system (400) of any of claims 1-6, the vehicle (1) optionally further comprises a selective catalytic reduction component (102) and a reductant injector (103), the vehicle (1) optionally further comprises a NOₓ-sensor arranged downstream of the ammonia slip catalyst.

8. The vehicle (1) according to claim 7, further comprising an upstream oxygen sensor (104) arranged upstream of said ammonia slip catalyst (101), and
a downstream oxygen sensor (105) arranged downstream of said ammonia slip catalyst (101).

9. A computer-implemented method for determining a condition of an ammonia slip catalyst (101) of a vehicle (1), comprising:
obtaining (S1), by processing circuitry (402) of a computer system (400), upstream oxygen concentration information indicative of an oxygen concentration of exhaust gases upstream of said ammonia slip catalyst (101) and downstream oxygen concentration information indicative of an oxygen concentration of exhaust gases downstream of said ammonia slip catalyst (101); and
determining (S4), by the processing circuitry (402), whether or not the ammonia slip catalyst (101) is in a N₂O production condition based on said upstream oxygen concentration information and said downstream oxygen concentration information.

10. The method of claim 9, further comprising:
obtaining (S2), by the processing circuitry (402), temperature information indicative of a temperature of the ammonia slip catalyst (101); and
determining (S4a), by the processing circuitry (402), whether or not the ammonia slip catalyst (101) is in said N₂O production condition also using said temperature information.

11. The method of claim 10, further comprising:
obtaining (S3), by the processing circuitry (402), downstream NOₓ concentration information indicative of a NOₓ concentration downstream of said ammonia slip catalyst (101); and
in response to determining, by the processing circuitry (402), that said temperature information is associated with a temperature of the ammonia slip catalyst (101) being within a predetermined temperature range and in response to determining, by the processing circuitry (402), that said downstream NOₓ concentration information indicates a variation of said NOₓ concentration downstream of said ammonia slip catalyst (101) being within a predetermined variation range for a predetermined time, determining (S4c), by the processing circuitry (402), that the ammonia slip catalyst (101) is in said N₂O production condition, optionally the method further comprises:
in response to determining, by the processing circuitry (402), that said temperature information is associated with a temperature of the ammonia slip catalyst (101) being outside said predetermined temperature range and in response to determining, by the processing circuitry (402), that said downstream NOₓ concentration information indicates a downstream NOₓ concentration being above a downstream NOₓ concentration threshold, determining (S5), by the processing circuitry (402), that the ammonia slip catalyst (101) is in an ammonia slip condition.

12. The method of any of claims 9-11, further comprising:
when it is determined, by the processing circuitry (402), that the ammonia slip catalyst (101) is in the N₂O production condition, estimating (S6), by the processing circuitry (402), the quantity of N₂O produced by said ammonia slip catalyst (101) using an assumption that an amount, preferably the total amount, of oxygen consumed by said ammonia slip catalyst (101), which can be determined on the basis of said upstream oxygen concentration information and said downstream oxygen concentration information, contributes to the formation of N₂O.

13. The method of any of claims 9-12, wherein a selective catalytic reduction component (102) is arranged upstream of the ammonia slip catalyst (101) and a reductant is injected by a reductant injector (103) arranged within or upstream of the selective catalytic reduction component (102), the method comprising:
- adjusting, optionally reducing, (S8) the amount of injected reductant by the reductant injector (103) in response to detecting that the ammonia slip catalyst (101) is in the N₂O production condition.

14. A computer program product comprising program code for performing, when executed by the processing circuitry (402), the method of any of claims 9-13.

15. A non-transitory computer-readable storage medium comprising instructions, which when executed by the processing circuitry (402), cause the processing circuitry (402) to perform the method of any of claims 9-13.
